# EUROPÄISCHE PATENTANMELDUNG

(11) **EP 2 793 088 A1**
(43) Veröffentlichungstag der Anmeldung: **22.10.2014**
(21) Anmeldenummer: 13163801.7
(22) Anmeldetag: 15.04.2013
(51) Int. Cl.: G05B 19/4063

(54) **Verfahren zum Überwachen mindestens einer Werkzeugmaschine**

(71) Anmelder: Schwäbische Werkzeugmaschinen GmbH, 78713 Schramberg-Waldmössingen (DE)
(72) Erfinder: Zuckschwerdt Johannes, 78122 St. Georgen (DE); Siegel Peter, 72172 Sulz-Bergfelden (DE); Tanneberger Andreas, 71034 Böblingen (DE)
(74) Vertreter: Schorr, Peter Karl

(57) **Zusammenfassung**

Die Erfindung betrifft ein Verfahren zum Überwachen mindestens einer Werkzeugmaschine, mit den Schritten:
a. Ermitteln mindestens eines Soll-Signals (4) mindestens einer Komponente (6) der Werkzeugmaschine (8) beim Ausführen eines Arbeitsschritts basierend auf mindestens einer vorgebbaren oder vorgegebenen Kennzahl (5);
b. Erfassen eines Ist-Signals (12) der mindestens einen Komponente (6) der Werkzeugmaschine (8) beim Ausführen des Arbeitsschritts;
c. Erfassen einer Abweichung des Soll-Signals zum Ist-Signal (12) und Erzeugen eines Abweich-Signals (14), umfassend zumindest eine Information über die Komponente (6), die Werkzeugmaschine (8) und/oder die Abweichung;
Das Verfahren zeichnet sich aus durch
d. Übertragen und/oder Speichern des Abweich-Signals (14) als Neu-Datensatz (18) an/in einer von extern zugreifbaren und von der Werkzeugmaschine (8) separaten oder separierbaren Speichereinheit (16).

## Beschreibung

Die Erfindung betrifft ein Verfahren zum Überwachen mindestens einer Werkzeugmaschine, mit den Schritten:
a. Ermitteln mindestens eines Soll-Signals mindestens einer Komponente der Werkzeugmaschine beim Ausführen eines Arbeitsschritts basierend auf mindestens einer vorgebbaren oder vorgegebenen Kennzahl;
b. Erfassen eines Ist-Signals der mindestens einen Komponente der Werkzeugmaschine beim Ausführen des Arbeitsschritts;
c. Erfassen einer Abweichung des Soll-Signals zum Ist-Signal und Erzeugen eines Abweich-Signals, umfassend zumindest eine Information über die Komponente, die Werkzeugmaschine und/oder die Abweichung.

Darüber hinaus betrifft die Erfindung eine Werkzeugmaschine, die mit einem derartigen Verfahren betreibbar ist sowie eine Speichereinheit zum Speichern und Abrufen von Datensätzen, die mit einer derartigen Werkzeugmaschine zusammenwirkt und/oder die nach einem derartigen Verfahren vertreibbar ist.

Werkzeugmaschinen, Speichereinheiten sowie Verfahren zum Überwachen mindestens einer Werkzeugmaschine sind bekannt. Hierbei wird der Arbeitsschritt einer Komponente der Werkzeugmaschine, beispielsweise eines Werkzeugs, überwacht. Hierbei ist der Komponente der Werkzeugmaschine beim Ausführen des Arbeitsschritts ein Soll-Signal zugeordnet, das mindestens durch eine hinterlegte Kennzahl gestützt ist. Wenn ein erfasstes Ist-Signal der Komponente der Werkzeugmaschine beim Ausführen des Arbeitsschrittes von dem Soll-Signal abweicht, bekommt der Bediener der Werkzeugmaschine einen entsprechenden Hinweis unmittelbar an der Werkzeugmaschine angezeigt, welche Komponente abweichend arbeitet und worin die Abweichung besteht.

Darüber hinaus ist es bekannt, Werkzeugmaschinen durch externen Zugriff, fern zu warten, wobei die Fernwartung durch konkrete Anfrage und Freigabe des Zugriffs auf die Werkzeugmaschine erfolgt.

Hierbei hat es sich als nachteilig herausgestellt, dass eine Abweichung des Ist-Signals der Komponente der Werkzeugmaschine zum Soll-Signal der Komponente der Werkzeugmaschine lediglich unmittelbar an der Werkzeugmaschine erfassbar ist. Hierdurch kann nie ganz ausgeschlossen werden, dass eine Warnmeldung der Werkzeugmaschine vom Bedienpersonal fehlinterpretiert oder übergangen wird, was das Risiko einer Beschädigung der Werkzeugmaschine oder was zu einem Reduzieren der Qualität der Werkstücke führen kann.

Aufgabe der Erfindung ist, ein eingangs genanntes Verfahren dahingehend zu verbessern, das der Herstellungsprozess, insbesondere von Werkstücken, optimiert ist.

Die Aufgabe wird bei einem eingangs genannten Verfahren erfindungsgemäß gelöst durch Übertragen und/oder durch Speichern des Abweich-Signals als Neu-Datensatz an/in einer von extern zugreifbaren und von der Werkzeugmaschine separaten oder separierbaren Speichereinheit.

Die vorgebbare oder vorgegebene Kennzahl, das Soll-Signal und/oder das Ist-Signal kann grundsätzlich sämtliche Bedingungen, die zum Betreiben oder Verfahren der Komponente der Werkzeugmaschine relevant sind, umfassen. Beispielsweise kann es eine Verfahrstrecke, Geschwindigkeit und/oder Beschleunigung entlang mindestens einer Dimension umfassen. Darüber hinaus ist es denkbar, dass die vorgebbare oder vorgegebene Kennzahl mindestens ein Leistungsparameter wie Stromstärke, hydraulischer und/oder pneumatischer Druck, Geschwindigkeit, Zeit, Zeitdauer, Spannung, Stromstärke, Kraft oder Drehmoment der Komponente der Werkzeugmaschine umfassen.

Die Komponente der Werkzeugmaschine kann beispielsweise ein Werkzeug, wie Drehwerkzeug, Fräswerkzeug, Bohrwerkzeug, Hohn- oder Schleifwerkzeug, Erodierer oder dergleichen umfassen. Ferner kann die Komponente auch eine Pumpe, einen Generator und/oder einen elektrischen, mechanischen, pneumatischen und/oder hydraulischen Antrieb umfassen.

Das Ist-Signal kann grundsätzlich beliebig erfasst werden. Es erweist sich als einfach und zweckmäßig, wenn das Ist-Signal durch mindestens einen Sensor der Werkzeugmaschine erfasst wird. Der Sensor kann einen Berührungssensor, einen Bewegungssensor, einen Beschleunigungssensor, einen Abstandssensor, einen Drucksensor, einen Fluidsensor und/oder einen Temperatursensor umfassen.

Darüber hinaus ist es denkbar, dass das Ist-Signal durch Informationen unterschiedlicher Sensoren zusammengesetzt ist.

Dadurch, dass das Abweich-Signal als Neu-Datensatz an eine von extern zugreifbare und von der Werkzeugmaschine separate oder separierbare Speichereinheit übertragen und darin speicherbar ist, kann von extern auf die Speichereinheit zugegriffen werden und das Abweich-Signal erfasst und dargestellt werden. Hierdurch ist es möglich, dass die Werkzeugmaschine über das Bedienpersonal hinaus überwachbar ist, wodurch ein Abweichen des Ist-Signals vom Soll-Signal rechtzeitig erfassbar ist. Solchenfalls kann frühzeitig eine Korrektur und/oder Reparatur durchgeführt werden, insbesondere bevor die Komponente und/oder die Werkzeugmaschine ausfällt.

Ferner lassen sich mehrere Werkzeugmaschinen gemeinsam leichter überwachen, wodurch ein Einsatz von Personal effizient ausgestaltbar ist.

Zudem lassen sich Stillstandzeiten der Werkzeugmaschine reduzieren und hierdurch die Effizienz des Betriebs der Werkzeugmaschine erhöhen.

Grundsätzlich ist es denkbar, dass lediglich der Neu-Datensatz in der Speichereinheit abgelegt wird, um von der Werkzeugmaschine beabstandet einsehbar zu sein.

Es erweist sich jedoch als zweckmäßig, wenn das Verfahren zusätzlich ein Prüfen umfasst, ob ein zum Neu-Datensatz korrespondierender Alt-Datensatz in der Speichereinheit abgelegt ist und/oder wenn es ein Abrufen eines in der Speichereinheit hinterlegten und zum Neu-Datensatz korrespondierenden Alt-Datensatzes und/oder ein Zuordnen oder ein Speichern des Neu-Datensatzes im Alt-Datensatz umfasst.

Hierdurch ist nachvollziehbar, ob die erfasste Abweichung erstmalig und/oder einmalig aufgetreten ist und/oder, ob ein systematisches Abweichen des Ist-Signals vom Soll-Signal vorliegt. Hierdurch ist ein Interpretieren des Abweich-Signals erleichtert.

Grundsätzlich ist es denkbar, dass das Prüfen, ob ein Alt-Datensatz vorliegt und/oder dass das Abrufen des Alt-Datensatzes durch die Speichereinheit seitens der Werkzeugmaschine erfolgt. Es erweist sich jedoch in Weiterbildung letztgenannten Erfindungsgedankens als vorteilhaft, wenn das Prüfen, ob ein Alt-Datensatz vorliegt und/oder wenn das Abrufen des Alt-Datensatzes durch die Speichereinheit, durch eine von der Speichereinheit unabhängige weitere Speichereinheit und/oder durch eine Datenverarbeitungseinheit durchgeführt wird.

Wenn das Abrufen des Alt-Datensatzes durch die Speichereinheit durch eine Datenverarbeitungseinheit durchgeführt wird, kann der Neu-Datensatz und der Alt-Datensatz ohne Weiteres ausgewertet werden. Darüber hinaus ist es hierdurch ermöglicht, das Alt-Datensätze und Neu-Datensätze unterschiedliche Speichereinheiten durch ein und dieselbe Verarbeitungseinheit auswertbar sind. Hierdurch ist es ermöglicht, dass eine System bedingte Abweichung der Werkzeugmaschine an unterschiedlichen Standorten erfassbar ist.

Ferner kann das Erfassen des Ist-Signals durchgängig oder in periodischen Abständen erfolgen.

Wenn das Ist-Signal durchgängig erfasst wird, ist die Sensibilität des Verfahrens erhöht. Wenn das Ist-Signal periodisch erfasst wird, lassen sich die Rechenzeiten und Energiebedarf reduzieren. Grundsätzlich ist es denkbar, dass die Abweichung durch manuelle Abfrage beispielsweise durch die Datenverarbeitungseinheit erfolgt. Um das Überwachen der mindestens eine Werkzeugmaschine zu erleichtern erweist es sich jedoch als vorteilhaft, wenn ein Anzeigen zumindest der Abweichung des Soll-Signal und Ist-Signal er folgt, wenn
a. das Abweich-Signal und/oder der Neu-Datensatz einer definierten oder definierbaren, insbesondere in der Werkzeugmaschine und/oder der Speichereinheit hinterlegbaren oder hinterlegten, Anzeigebedingung genügt und/oder
b. eine, insbesondere in der Speichereinheit hinterlegte, vordefinierte oder vordefinierbare Anzahl an Alt-Datensätzen erreicht oder überschritten ist.

Die Anzeigebedingung kann beispielsweise derart sein, dass sie eine Beschädigung der Komponente oder ein fehlerhaftes Arbeiten der mindestens einen Komponente der Werkzeugmaschine umfasst.

Ferner ist es denkbar, dass die Anzeigebedingung so gesetzt ist, dass die Abweichung des Ist-Signals zum Soll-Signal derart gering ist, dass die Qualität der Bearbeitung eines Werkstücks nicht oder nur gering beeinträchtigt ist. Solchenfalls kann ein Austausch oder eine Reparatur der Komponente der Werkzeugmaschine eingeplant werden, wenn die Werkzeugmachine ohnehin stillsteht.

Wenn vordefinierte oder verdefinierbare Anzahl an Alt-Datensätzen erreicht oder überschritten ist, ist eine Entscheidungshilfe gegeben, ob die Abweichung ein erstmals oder nur einmal auftretendes Phänomen ist oder ob es sich um einen sich wiederholenden systemischen Fehler der Werkzeugmaschine handelt.

Es erweist sich als vorteilhaft, wenn die vordefinierbare oder vordefinierbare Anzahl an Alt-Datensätzen mindestens zehn, insbesondere mindestens fünf, insbesondere mindestens eins, umfasst. Hierdurch ist unterscheidbar, ob es sich bei der Abweichung um ein einmaliges Phänomen handelt oder ob es sich um eine systemische Abweichung handelt.

Darüber hinaus erweist es sich als vorteilhaft, wenn der Neu-Datensatz zumindest eine Information über die Abweichung des Ist-Signals vom Soll-Signal, die Komponente und/oder die Werkzeugmaschine umfasst und/oder dass der Alt-Datensatz zumindest eine Information über die Abweichung, die Komponente und/oder die Werkzeugmaschine umfasst.

Um ein Auswerten des Abweich-Signals zu erleichtern erweist es sich als vorteilhaft, wenn basierend auf dem Abweich-Signal ein automatisches und/oder manuelles Diagnostizieren und/oder Kalibrieren zumindest der Komponente durchgeführt wird.

Grundsätzlich ist es denkbar, dass die Abweichung und/oder das Abweich-Signal lediglich einer einzigen Werkzeugmaschine angezeigt wird. Darüber hinaus ist denkbar, dass mindestens einer der mindestens einen Alt-Datensätze eine von der Werkzeugmaschine des Neu-Datensatzes abweichende weitere Werkzeugmaschine umfasst.

Es erweist sich als zweckmäßig, wenn eine Fernwartung durch das Bedienpersonal anforderbar oder freigebbar ist. Ferner kann eine Fernwartung durchgeführt werden, ohne dass diese durch das Bedienpersonal angefordert wird.

Schließlich erweist es sich als vorteilhaft, wenn mindestens einer der mindestens einen Alt-Datensätze eine von der Werkzeugmaschine des Neu-Datensatzes abweichende weitere Werkzeugmaschine umfasst.

Hierdurch ist es ermöglicht, auf unterschiedliche Werkzeugmaschinen zurückzugreifen, wodurch systemische Fehler der Komponenten der Werkzeugmaschine erfassbar sind. Dadurch ist eine Verschlechterung der Qualität des Arbeitsergebnisses rechtzeitig fassbar ist.

Darüber hinaus wird die Aufgabe gelöst durch eine Werkzeugmaschine, die nach einem Verfahren, insbesondere mit einem der zuvor genannten Verfahrensschritte, betreibbar ist. Schließlich wird die Aufgabe durch eine Speichereinheit zum Speichern und Abrufen von Datensätzen gelöst, die nach einem Verfahren, insbesondere mit mindestens einem der zuvor genannten Verfahrensschritte betreibbar ist.

Das erfindungsgemäße Verfahren, die erfindungsgemäße Werkzeugmaschine und die erfindungsgemäße Speichereinheit erweisen sich in mehrfacher Hinsicht als vorteilhaft.

Dadurch, dass das Abweich-Signal als Neu-Datensatz an eine von extern zugreifbare und der Werkzeugmaschine separate und separierbare Speichereinheit übertragbar und darin speicherbar ist, können Abweichungen extern erfasst werden.

Dadurch, dass ein Anzeigen der Abweichung durch vordefinierte Anzeigebedingungen oder durch Überschreiten oder Erreichen einer bestimmten Anzahl von hinterlegten Alt-Datensätzen erfolgt, kann rechtzeitig ein Abweichen des Ist-Signals vom Soll-Signal erfasst werden.

Weitere Merkmale, Einzelheiten sowie Vorteile der Erfindung ergeben sich aus den beigefügten Patentansprüche, aus der zeichnerischen Darstellung und der nachfolgender Beschreibung eines bevorzugten Ausführungsbeispiels des erfindungsgemäßen Verfahrens.

In der Zeichnung zeigt:
- Fig. 1: ein schematisches Ablaufdiagramm des erfindungsgemäßen Verfahrens;
- Fig. 2: eine schematische Darstellung der das Verfahren abbildenden Komponenten.

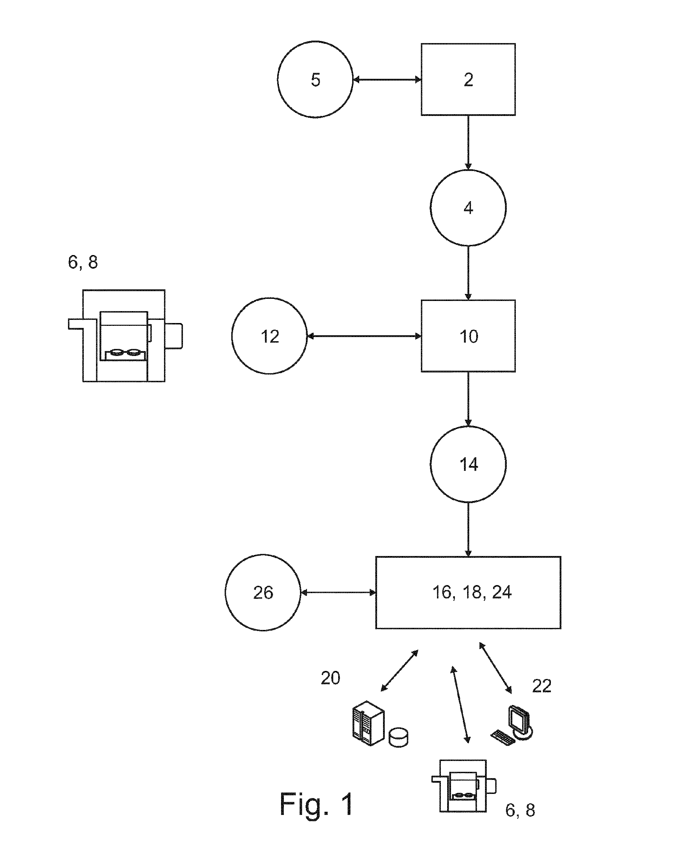

Figur 1 zeigt ein schematisches Ablaufprogramm des erfindungsgemäßen Verfahrens. In einem ersten Verfahrensschritt 2 wird ein Soll-Signal 4 einer Komponente 6 einer Werkzeugmaschine 8 ermittelt. Hierbei wird auf mindestens eine hinterlegte vorgegebene Kennzahl 5 zurückgegriffen. In einem weiteren Schritt 10 wird ein Ist-Signal 12 der mindestens einen Komponente 6 der Werkzeugmaschine 8 erfasst. Hierbei wird eine Abweichung des Soll-Signals 4 zum Ist-Signal 12 erfasst und ein Abweich-Signal 14 erzeugt. Dieses wird an eine Speichereinheit 16 übertragen und als Neu-Datensatz 18 abgelegt, wobei auf die Speichereinheit 16 von extern zugreifbar ist. Der externe Zugriff kann beispielsweise durch eine weitere Speichereinheit 20 oder eine Datenverarbeitungseinheit 22 erfolgen. Darüber hinaus kann auch eine weitere Werkzeugmaschine 8 auf die Speichereinheit 16 zugreifen.

Ferner sind in der Speichereinheit 16 auch Alt-Datensätze 24 ablegbar und/oder gespeichert, die bzgl. Werkzeugmaschine 8 und/oder Komponente 6 mit dem Neu-Datensatz 18 korrespondieren.

In der weiteren Speichereinheit 20, in der Verarbeitungseinheit 22 und/oder in einer in der Werkzeugmaschine 8 oder einer weiteren Werkzeugmaschine 8 folgt ein Anzeigen des Abweich-Signals 14 oder des Neu-Datensatzes 18, wenn eine in der Speichereinheit 16 hinterlegte Anzeigebedingung 26 erfüllt ist. Diese kann beispielsweise eine Abweichung des Ist-Signals 12 vom Soll-Signal von mindestens 10% des Soll-Signals 4 umfassen.

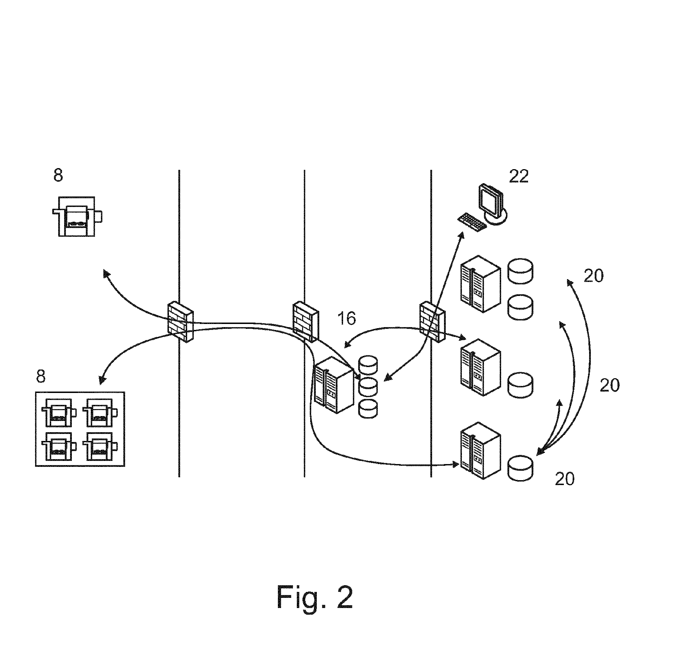

Figur 2 zeigt eine schematische Darstellung unterschiedlicher Konstellationen, bezüglich derer das erfindungsgemäße Verfahren einsetzbar ist.

Die mindestens eine Werkzeugmaschine 8 kann lediglich eine einzelne Werkzeugmaschine 8 umfassen oder mehrere Werkzeugmaschinen 8. Letzterenfalls ist es insbesondere denkbar, dass diese räumlich voneinander getrennt betrieben werden. Durch das erfindungsgemäße Verfahren werden von den Werkzeugmaschinen 8 zumindest die Ist-Signale 12 der Komponenten 6 beim Ausführen eines Arbeitsschritts ermittelt und mit den korrespondierenden Soll-Signalen 4 verarbeitet, um eine Abweichung zu bestimmen und hieraus ein Abweich-Signal 14 zu generieren.

Dieses wird an die Speichereinheit 16 übertragen, worin es gespeichert bzw. in dem Neu-Datensatz 18 abgelegt wird. Auf den Neu-Datensatz 18 oder auf bereits in der Speichereinheit 16 hinterlegte Alt-Datensätze 24 kann mittels weiterer Speichereinheiten 20, mittels der Datenverarbeitungseinheit 22 oder durch eine weitere Werkzeugmaschine 8 zugegriffen werden.

Im Folgenden wird kurz das erfindungsgemäße Verfahren sowie das Zusammenwirken der einzelnen Bauteile und Komponenten beschrieben.

Bei Inbetriebnahme der Werkzeugmaschine und beim Ausführen eines Arbeitsschritts durch die mindestens eine Komponente 6 der Werkzeugmaschine 8 wird auf eine vorgegebene Kennzahl 6 zurückgegriffen, die den Arbeitsabschnitt abbildet. Hieraus wird ein Soll-Signal 4 ermittelt.

Bei Betrieb der Komponente 6 der Werkzeugmaschine 8 wird ein Ist-Signal 12 erfasst. Aus dem Soll-Signal 4 und dem Ist-Signal 12 wird eine Abweichung ermittelt, anhand der ein Abweichsignal 14 erzeugt wird. Dieses wird an eine von extern zugreifbare Speichereinheit 16 übertragen und dort als Neu-Datensatz 18 abgelegt. Darüber hinaus sind in der Speichereinheit 16 auch Alt-Datensätze 24 abgelegt, wodurch es ermöglicht ist, festzustellen, ob die Abweichung vorher schon einmal aufgetreten ist, oder ob es sich um singuläres Ereignis handelt.

Hierdurch ist die Abweichung extern feststellbar. Es kann ein automatisches und/oder manuelles Diagnostizieren der Abweichung stattfinden und ein automatisches oder manuelles Kalibrieren zumindest der Komponente 6 der Werkzeugmaschine 8 ausgelöst werden.

Die in der vorstehenden Beschreibung, in den Ansprüchen, sowie in den Zeichnungen gezeigten Merkmale der Erfindung können sowohl einzeln, als auch in jeder beliebigen Kombination in der Verwirklichung der Erfindung und ihren verschiedenen Ausführungsformen wesentlich sein.

### Bezugszeichenliste

| | |
|---|---|
| 2 | Verfahrensschritt |
| 4 | Soll-Signal |
| 5 | Kennzahl |
| 6 | Komponente |
| 8 | Werkzeugmaschine |
| 10 | Verfahrensschritt |
| 12 | Ist-Signal |
| 14 | Abweichsignal |
| 16 | Speichereinheit |
| 18 | Neu-Datensatz |
| 20 | weitere Speichereinheit |
| 22 | Datenverarbeitungseinheit |
| 24 | Alt-Datensatz |
| 26 | Anzeigebedingung |

## Patentansprüche

1. Verfahren zum Überwachen mindestens einer Werkzeugmaschine (8), mit den Schritten:
a. Ermitteln mindestens eines Soll-Signals (4) mindestens einer Komponente (6) der Werkzeugmaschine (8) beim Ausführen eines Arbeitsschritts basierend auf mindestens einer vorgebbaren oder vorgegebenen Kennzahl (5);
b. Erfassen eines Ist-Signals (12) der mindestens einen Komponente (6) der Werkzeugmaschine (8) beim Ausführen des Arbeitsschritts;
c. Erfassen einer Abweichung des Soll-Signals zum Ist-Signal (12) und Erzeugen eines Abweich-Signals (14), umfassend zumindest eine Information über die Komponente (6),
die Werkzeugmaschine (8) und/oder die Abweichung;
**Gekennzeichnet, durch** den Schritt:
d. Übertragen und/oder Speichern des Abweich-Signals (14) als Neu-Datensatz (18) an/in einer von extern zugreifbaren und von der Werkzeugmaschine (8) separaten oder separierbaren Speichereinheit (16).

2. Verfahren nach Anspruch 1, **gekennzeichnet durch** Prüfen, ob ein zum Neu-Datensatz (18) korrespondierender Alt-Datensatz (24) in der Speichereinheit (16) abgelegt ist und/oder **durch** Abrufen eines in der Speichereinheit (16) hinterlegten und zum Neu-Datensatz (18) korrespondierenden Alt-Datensatzes (24) und/oder Zuordnen oder Speichern des Neu-Datensatzes (18) im Alt-Datensatz (24).

3. Verfahren nach Anspruch 2, **dadurch gekennzeichnet, dass** das Prüfen, ob ein Alt-Datensatz (24) vorliegt und/oder dass das Abrufen des Alt-Datensatzes (24) durch die Speichereinheit (16), durch eine von der Speichereinheit (16) unabhängige weitere Speichereinheit (20) und/oder durch eine Datenverarbeitungseinheit (22) durchgeführt wird.

4. Verfahren nach mindestens einem der vorhergehenden Ansprüche, wobei das Erfassen des Ist-Signals (12) durchgängig oder in periodischen Abständen erfolgt.

5. Verfahren nach mindestens einem der vorhergehenden Ansprüche, **gekennzeichnet durch** ein Anzeigen zumindest der Abweichung des Soll-Signals (4) zum Ist-Signal (12), wenn
a. das Abweich-Signal (14) und/oder der Neu-Datensatz (18) einer definierten oder definierbaren, insbesondere in der Werkzeugmaschine (8) und/oder der Speichereinheit (16) hinterlegbaren oder hinterlegten, Anzeigebedingung (26) genügt und/oder
b. eine, insbesondere in der Speichereinheit (16) hinterlegte, vordefinierte oder vordefinierbare Anzahl an Alt-Datensätzen (24) erreicht oder überschritten ist.

6. Verfahren nach mindestens einem der vorhergehenden Ansprüche, **dadurch gekennzeichnet, dass** die definierte oder definierbare Anzeigebedingung (26) eine Abweichung des Ist-Signals (12) vom Soll-Signal (4) von mindestens 10% des Soll-Signals (4), insbesondere mindestens 5% des Soll-Signals (4), insbesondere mindestens 1% des Soll-Signals (4), umfasst.

7. Verfahren nach mindestens einem der vorhergehenden Ansprüche, **dadurch gekennzeichnet, dass** die vordefinierbare oder vordefinierbare Anzahl an Alt-Datensätzen (24) mindestens zehn, insbesondere mindestens fünf, insbesondere mindestens eins, umfasst.

8. Verfahren nach mindestens einem der vorhergehenden Ansprüche, **dadurch gekennzeichnet, dass** der Neu-Datensatz (18) zumindest eine Information über die Abweichung des Ist-Signals (12) vom Soll-Signal (4), die Komponente (6) und/oder die Werkzeugmaschine (8) umfasst und/oder dass der Alt-Datensatz (24) zumindest eine Information über die Abweichung, die Komponente (6) und/oder die Werkzeugmaschine (8) umfasst.

9. Verfahren nach mindestens einem der vorhergehenden Ansprüche, **dadurch gekennzeichnet, dass** basierend auf dem Abweich-Signal (14) ein automatisches und/oder manuelles Diagnostizieren und/oder Kalibrieren zumindest der Komponente (6) durchgeführt wird.

10. Verfahren nach Anspruch 9, **dadurch gekennzeichnet, dass** das automatische und/oder manuelle Diagnostizieren und/oder Kalibrieren durch eine Steuereinheit der Werkzeugmaschine (8) oder durch die externe Speichereinheit (16) durchgeführt wird.

11. Verfahren nach mindestens einem der vorhergehenden Ansprüche, **dadurch gekennzeichnet, dass** mindestens einer der mindestens einen Alt-Datensätze (24) eine von der Werkzeugmaschine (8) des Neu-Datensatzes (18) abweichende weitere Werkzeugmaschine (8) umfasst.

12. Werkzeugmaschine (8), die nach einem Verfahren einer der Ansprüche 1 bis 11 betreibbar ist.

13. Speichereinheit (16) zum Speichern und Abrufen von Datensätzen, die nach einem Verfahren einer der Ansprüche 1 bis 11 betreibbar ist.
